# EUROPÄISCHE PATENTSCHRIFT

(11) **EP 1 744 047 B1**
(45) Veröffentlichungstag und Bekanntmachung des Hinweises auf die Patenterteilung: **16.04.2008**
(21) Anmeldenummer: 06115734.3
(22) Anmeldetag: 20.06.2006
(51) Int. Cl.: F02M 35/10, F02D 9/10, F02B 31/08

(54) **Saugmodul, insbesondere für eine Brennkraftmaschine**
Intake module, in particular for internal combustion engine
Module d'aspiration, notamment pour moteur à combustion interne

(30) Priorität: 14.07.2005 DE 202005011254 U
(43) Veröffentlichungstag der Anmeldung: 17.01.2007
(73) Patentinhaber: MANN+HUMMEL GmbH, 71638 Ludwigsburg (DE)
(72) Erfinder: Ludmann, Armin, 70839, Gerlingen (DE); Nocera, Ettore, 74354, Besigheim (DE)

(56) Entgegenhaltungen:
- EP-A1- 0 701 057
- EP-A2- 1 101 916
- DE-A1- 19 919 533
- JP-A- 9 125 970

## Beschreibung

Die Erfindung betrifft ein Saugmodul, insbesondere für eine Brennkraftmaschine der im Oberbegriff des Anspruchs 1 angegebenen Gattung.

Aus der DE 195 03 771 A1 ist ein Saugmodul für eine Brennkraftmaschine bekannt, das wenigstens einen Ansaugtrakt umfaßt. Dabei weist der Ansaugtrakt zwei Saugrohröffnungen auf, die in einem Flanschbauteil nebeneinander angeordnet sind. Eine der Saugrohröffnungen ist derart gestaltet, daß deren Querschnitt unverändert bleibt und in der anderen Saugrohröffnung befindet sich ein Drehschieber, durch den der Querschnitt dieser Saugrohröffnung veränderbar ist.

Ein solches Saugmodul arbeitet zuverlässig und führt dazu, daß in Betriebszuständen, in denen nur ein Teil des Saugrohrquerschnitts benötigt wird, kein zusätzliches Teil den Strömungswiderstand behindert, was einem verminderten Verbrauch entgegenkommt. In Betriebszuständen, in denen ein erweiterter Querschnitt erforderlich ist, wird über den zuschaltbaren Drehschieber die Querschnittsfläche optimal angepaßt.

Es ist ferner aus der DE 199 19 533 ein Saugmodul für eine Brennkraftmaschine bekannt, mit mindestens einem Ansaugtrakt, der zwei Saugrohröffnungen aufweist, von denen eine Saugrohröffnung mit im wesentlichen konstantem Querschnitt in die Brennkraftmaschine führt und die zweite Saugrohröffnung desselben Ansaugtraktes bezüglich ihres Strömungsquerschnittes veränderbar ist. Hierzu wird eine Steuerklappe verwendet, die an einem Gehäuseeinsatz angeordnet ist. Dieser Gehäuseeinsatz besteht im wesentlichen aus einem dünnwandigen und ebenen Aluminiumdruckgussrahmen.

Der vorliegenden Erfindung liegt die Aufgabe zugrunde, ein gattungsgemäßes Saugmodul zu schaffen, das einfacher im Aufbau und variabler in der Ausgestaltung ist.

Diese Aufgabe wird durch ein Saugmodul mit den Merkmalen des Anspruchs 1 gelöst.

Vorteilhaft ist bei dem erfindungsgemäßen Saugmodul, daß die Trennwand zunächst als separates Bauteil gefertigt ist und nach dem Montieren des beweglichen Bauteils, das vorzugsweise als Klappe ausgeführt wird, in den betreffenden Ansaugtrakt im Saugmodul eingesetzt wird. Auf diese Weise kann das Gehäuse, in dem der Ansaugtrakt ausgebildet ist, einfacher gestaltet werden, insbesondere auch im Hinblick auf die Lager für das bewegliche Bauteil, denn diese werden ebenfalls an der Trennwand ausgebildet. Somit können erforderliche Änderungen an der Trennwand, der Klappe oder den Lagern auf einfache Weise vorgenommen werden, ohne daß hierzu eine Änderung des Gehäuses selbst erforderlich ist.

Bei der Klappe handelt es sich um eine einseitig gelagerte Klappe, die um eine Achse schwenkbar gelagert ist. Zur Lagerung dienen Zapfenlager, die in Lageröffnungen der Trennwand gelagert sind. Die Lagerzapfen werden vorzugsweise einstückig mit der Klappe ausgeführt, wobei zur Verringerung der Lagerreibung Lagerbuchsen eingesetzt werden können. Derartige Lagerbuchsen bestehen in der Regel aus einem Material mit guten Gleiteigenschaften. Erfindungsgemäß weisen die beiden an einer Klappe ausgebildeten Zapfenlager und ebenso die Lageröffnungen in der Trennwand unterschiedliche Durchmesser auf. Dadurch ist es möglich, das Zapfenlager mit größerem Durchmesser stirnseitig mit einer Öffnung zu versehen, in die ein weiteres Bauteil einsteckbar ist, wobei dieses weitere Bauteil direkt oder indirekt mit einer Betätigungseinrichtung verbunden sein kann.

Es wird darüber hinaus als vorteilhaft angesehen, daß die Klappe in zwei Positionen einstellbar ist, wobei die zweite Saugrohröffnung in einer ersten Position der Klappe vollständig geöffnet und in einer zweiten Position vollständig geschlossen ist. Dabei kann die Anordnung derart gestaltet sein, daß die Klappe in der ersten Position vollständig innerhalb der Kontur der Trennwand liegt. Damit wird in dieser Position durch die Klappe kein Strömungswiderstand erzeugt.

Gemäß einer Ausführungsvariante befindet sich die Schwenkachse an dem Ende der Klappe, das in der zweiten Saugrohröffnung - in Strömungsrichtung gesehen - weiter hinten liegt. Bei einer derartigen Anordnung kann es zweckmäßig sein, daß in der Trennwand vor der Schwenkachse der Klappe eine Öffnung vorgesehen ist, die mindestens annähernd der Klappenkontur entspricht und in der ersten Position der Klappe durch diese verschließbar ist. Bei einer derartigen Ausführung wird, wenn sich die Klappe in der zweiten Position in der zweiten Saugrohröffnung befindet, der auf die Klappe treffende Saugluftstrom durch die Öffnung in der Trennwand in die erste Saugrohröffnung geleitet.

Gemäß einer anderen Ausführungsform befindet sich die Schwenkachse an dem Ende der Klappe, das in der zweiten Saugrohröffnung - in Strömungsrichtung gesehen - weiter vorne liegt. In diesem Fall kann die Länge der Trennwand verkürzt sein. Es ist außerdem vorteilhaft, daß eine Betätigungsstange vorgesehen ist, mittels der alle Klappen in einem Saugmodul simultan betätigbar sind. Es ist somit nur ein Stellantrieb erforderlich, der eine Längsbewegung der Betätigungsstange erzeugt. Zur Umsetzung der Längsbewegung der Betätigungsstange in eine Schwenkbewegung am Klappenlager ist es erforderlich, an einem Zapfenlager jeder Klappe einen Hebel anzuordnen, dessen freies Ende mit der Betätigungsstange gekoppelt ist.

Eine besonders vorteilhafte und auch einfache Art der Anordnung und Befestigung der Trennwand im Ansaugtrakt ist dadurch gegeben, daß in dem Ansaugtrakt Nuten vorgesehen sind, in denen seitliche Ränder der Trennwand aufgenommen werden. Es kann zweckmäßig sein, daß die seitlichen Ränder der Trennwand als Rahmenteile ausgebildet sind, deren Breite größer ist als die Dicke der Trennwand. Bei einer solchen Ausgestaltung ist in den Rahmenteilen genügend Raum für die Lager gegeben, der Materialaufwand für die Trennwand selbst kann jedoch minimiert werden. Gemäß einer zweckmäßigen Ausgestaltung können die Rahmenteile an einer Trennwand unterschiedliche Längen aufweisen, wobei der vordere Rand der Trennwand bezogen auf die Breite der Trennwand schräg verläuft. Alternativ hierzu können die Rahmenteile gleichlang sein, wobei der vordere Rand der Trennwand bezogen auf die Breite der Trennwand konkav gestaltet ist. Je nach Gestaltung des Ansaugtraktes bzw. der Saugrohröffnungen kann auch die Kontur der Klappe angepaßt sein. Es wird daher als zweckmäßig erachtet, daß die Klappe einen Klappenkörper aufweist, an dessen der Schwenkachse abgewandten Ende seitliche Abrundungen vorgesehen sind.

Ausführungsbeispiele des erfindungsgemäßen Saugmoduls sind nachstehend anhand der Zeichnung näher erläutert. In der Zeichnung zeigt:

Fig. 1 einen Teilschnitt durch ein Saugmodul mit mehreren Ansaugtrakten,

Fig. 2 einen Schnitt durch die Trennwand und Klappe in einem Ansaugtrakt in der Trennwandebene,

Fig. 3 eine perspektivische Darstellung der Trennwände mit Klappen und Betätigungseinrichtung für ein Saugmodul gemäß Fig. 1,

Fig. 4 eine Vorderansicht einer Trennwand mit Klappe,

Fig. 5 einen Schnitt entlang der Linie V-V in Fig. 4,

Fig. 6 eine Explosionsdarstellung der Trennwand mit Klappe,

Fig. 7 eine perspektivische Darstellung der Anordnung gemäß Fig. 4,

Fig. 8 eine Ausführungsvariante zu Fig. 1,

Fig. 9 eine Vorderansicht einer Trennwand und Klappe für ein Saugmodul gemäß Fig. 8,

Fig. 10 einen Schnitt entlang der Linie X-X in Fig. 9,

Fig. 11 eine Explosionsdarstellung der Trennwand mit Klappe,

Fig. 12 eine perspektivische Darstellung der Anordnung gemäß Fig. 9.

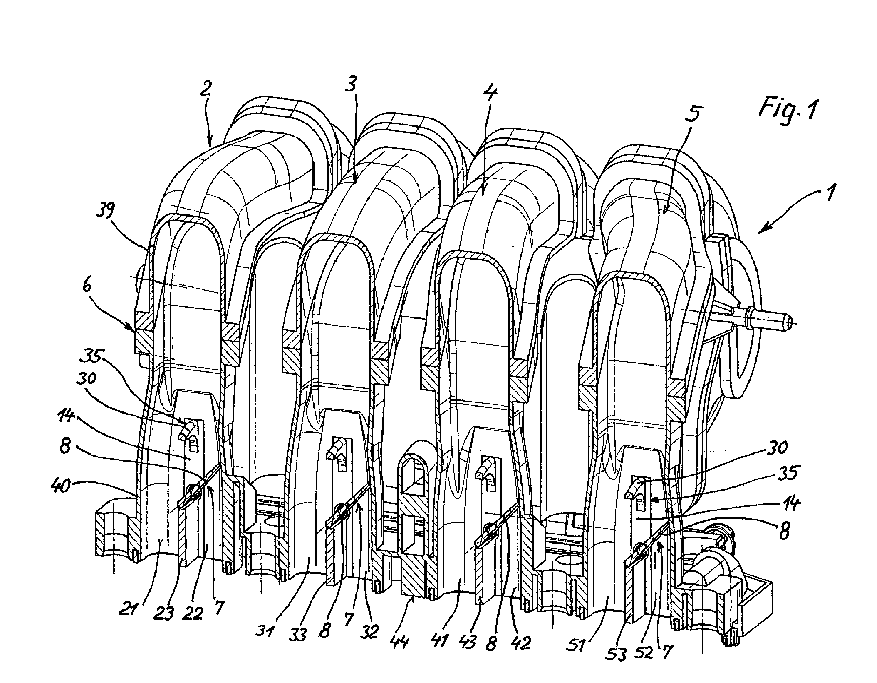

Die Fig. 1 zeigt ein Saugmodul 1, bei dem in einem Gehäuse 6 vier Ansaugtrakte 2, 3, 4, 5 ausgebildet sind. Das Gehäuse 6 besteht aus einer Oberschale 39 und einer Unterschale 40. An der Unterseite der Unterschale 40 ist ein Flansch 44 ausgebildet, der zur Anlage des Saugmoduls 1 an einem Zylinderkopf einer Brennkraftmaschine vorgesehen ist.

In dem sich in der Unterschale 40 erstreckenden Abschnitt des Ansaugtraktes 2 ist eine Trennwand 23 angeordnet, die diesen Abschnitt des Ansaugtraktes 2 in eine erste Saugrohröffnung 21 und eine zweite Saugrohröffnung 22 unterteilt. Auf die gleiche Weise werden im Ansaugtrakt 3 eine erste Saugrohröffnung 31 und eine zweite Saugrohröffnung 32 durch eine Trennwand 33 gebildet. Dies gilt ebenso für die Ansaugtrakte 4 und 5, in denen entsprechend eine Trennwand 43 bzw. 53 eingesetzt ist. An der Wandung des jeweiligen Ansaugtraktes 2, 3, 4, 5 ist eine in Längsrichtung des Ansaugtraktes verlaufende Nut 35 vorgesehen, in der der Rand der jeweiligen Trennwand 23, 33, 43, 53 aufgenommen ist. Die Anordnung einer solchen Nut 35 dient zur genauen Bestimmung der Lage der Trennwand 23, 33, 43, 53 und zu deren leichter Montage von der Unterseite, das heißt vom Flansch 44 her. Jede der Trennwände 23, 33, 43, 53 besitzt ein bewegliches Bauteil 7, das im Ausführungsbeispiel als schwenkbare Klappe 8 ausgeführt ist. Dabei ist die schwenkbare Klappe 8 an ihrem unteren Ende mit entsprechenden Lagern versehen, auf die später noch näher eingegangen wird. Die Klappen 8 sind derart angeordnet, daß sie in einer ersten Position mit der Trennwand 23, 33, 43, 53 fluchten und somit eine in der Trennwand ausgebildete Öffnung 14 verschließen. Damit ist in beiden Saugrohröffnungen 21, 22 bzw. 31, 32 bzw. 41, 42 und 51, 52 der gleiche Durchtrittsquerschnitt gegeben. In der in Fig. 1 dargestellten zweiten Position der Klappe 8 verschließt diese jeweils die zweite Saugrohröffnung 22, 32, 42, 52 und gibt damit die Öffnung 14 in der Trennwand 23, 33, 43, 53 frei. Der im jeweiligen Ansaugtrakt 2, 3, 4, 5 angesaugte Luftstrom wird damit vollständig durch die jeweilige erste Saugrohröffnung 21, 31, 41 und 51 geleitet. Der in Strömungsrichtung vordere Rand der jeweiligen Trennwand 23, 33, 43, 53 ist mit dem Bezugszeichen 30 bezeichnet.

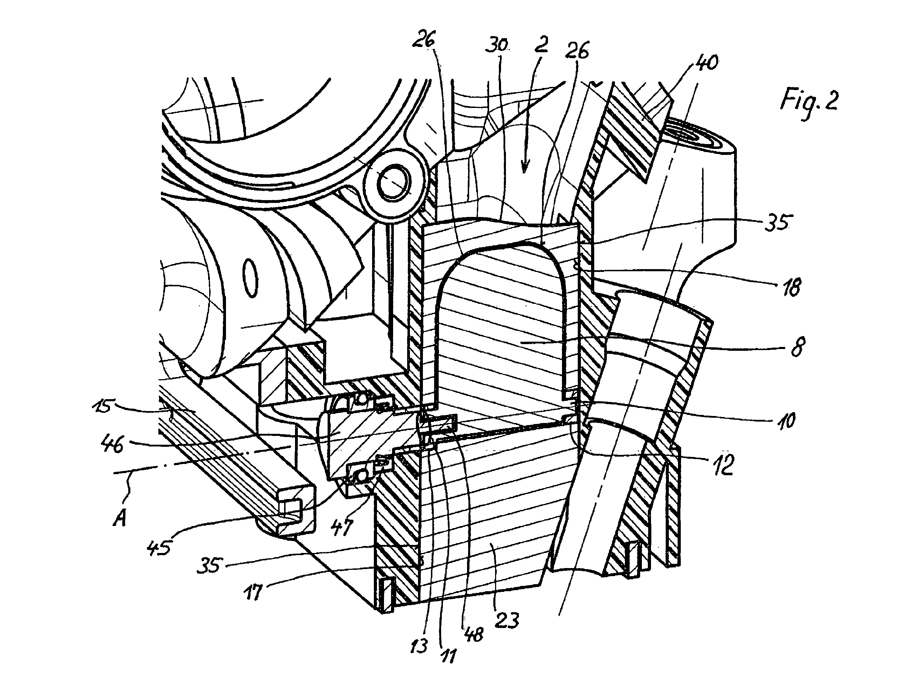

Die Fig. 2 zeigt einen Schnitt durch den unteren Abschnitt des Ansaugtraktes 2 mit der darin angeordneten Trennwand 23 sowie der Klappe 8. Es ist daraus ersichtlich, daß in der Unterschale 40 in der Wandung des Ansaugtraktes 2 zwei sich gegenüberliegende Nuten 35 angeordnet sind, in denen die seitlichen Ränder der Trennwand 23 aufgenommen sind. In der Trennwand 23 sind Lageröffnungen 12, 13 für die Zapfenlager 10, 11 ausgebildet, wobei ersichtlich ist, daß das Zapfenlager 10 kleiner ist als das Zapfenlager 11. Durch den größeren Durchmesser des Zapfenlagers 11 ist es möglich, stirnseitig an dem entsprechenden Zapfen eine Öffnung vorzusehen, in die ein Vierkant 48, der an der Stirnseite eines weiteren Lagerelementes angeformt ist, eingreift. Dieses weitere Lagerelement ist Bestandteil des Traglagers 45 und einstückig mit einem Betätigungshebel 46 ausgeführt, der - wie später noch erläutert wird - mit einer Betätigungsstange 15 verbunden ist. Die Klappe 8 ist bei Verschiebung der Betätigungsstange 15 um die Achse A schwenkbar. Wie aus Fig. 2 weiter ersichtlich ist, ist die Klappe 8 an dem Ende, das der Schwenkachse A abgewandt ist, mit Abrundungen 26 versehen. Die in Anströmrichtung vordere Kante 30 der Trennwand 23 ist gemäß Darstellung in Fig. 2 geneigt ausgeführt, das heißt, die seitlichen Ränder der Trennwand 23 sind unterschiedlich lang.

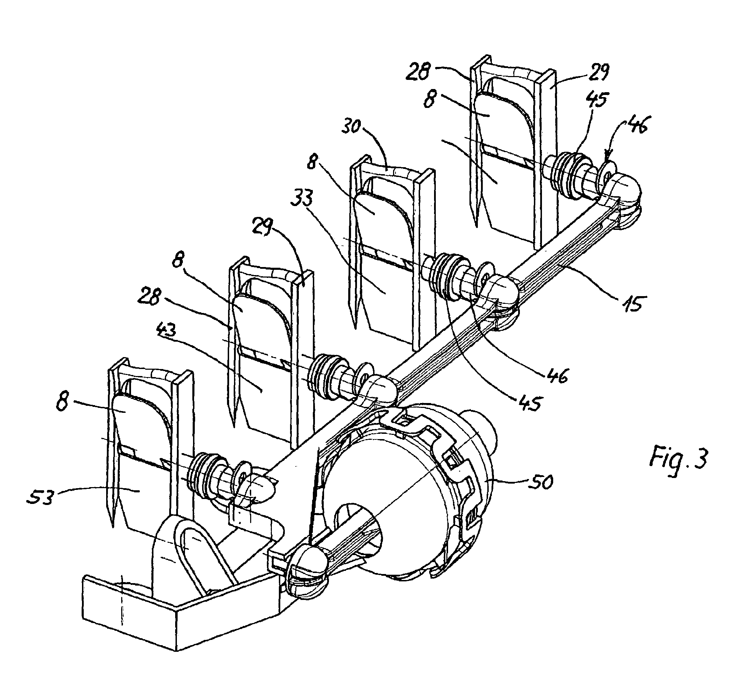

Die Fig. 3 zeigt eine perspektivische Darstellung der vier Trennwände 23, 33, 43, 53 mit den jeweiligen Klappen 8 sowie einer Betätigungseinrichtung zum Verschwenken der Klappen 8. Die Betätigungseinrichtung umfaßt eine Betätigungsstange 15, die linearverschieblich ist und die über entsprechende Betätigungshebel 46 mit den Klappen 8 gekoppelt ist. Zur Verschiebung der Betätigungsstange 15 dient ein Stellantrieb 50, der im vorliegenden Beispiel als Unterdruckdose ausgeführt ist. Wie ferner aus Fig. 3 ersichtlich ist, befindet sich neben dem Hebel 46 das Traglager 45, das gemäß Darstellung in Fig. 2 in der Unterschale des Gehäuses gelagert ist. Die Trennwände 23, 33, 43, 53 besitzen jeweils seitliche Rahmenteile 28 und 29, wobei die Rahmenteile 28 etwas kürzer ausgeführt sind als die Rahmenteile 29. Aus diesem Grund ist auch der Verlauf des vorderen Randes der Trennwand von dem Rahmenteil 29 zum Rahmenteil 28 hin leicht geneigt.

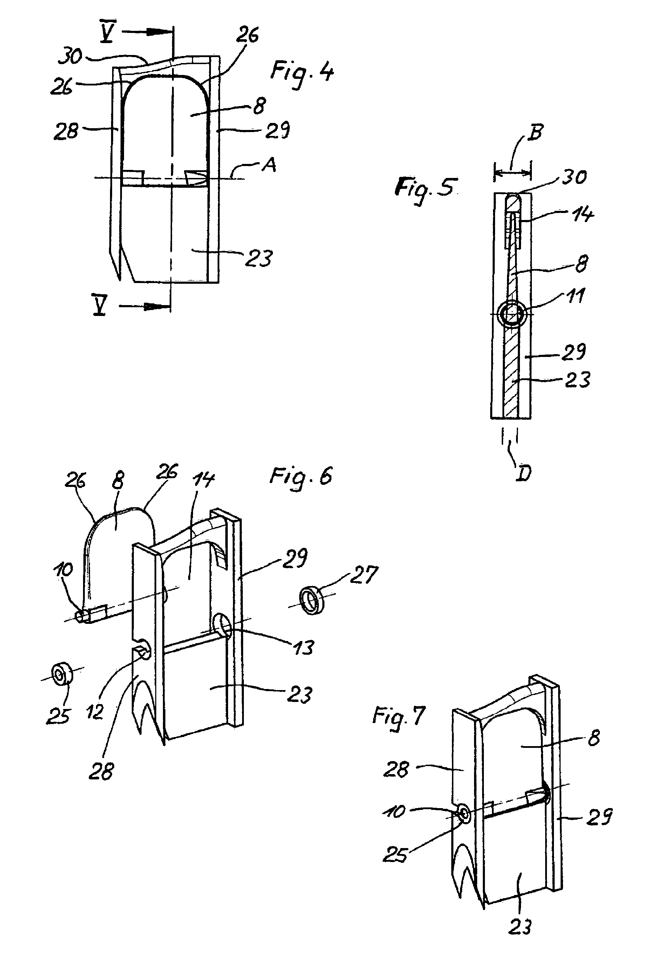

Die Fig. 4 zeigt eine Vorderansicht der Trennwand 23 mit den seitlichen Rahmenteilen 28 und 29. Die von der Strömung zunächst berührte Vorderkante 30 verläuft von dem Rahmenteil 29 zum Rahmenteil 28 hin etwas geneigt. In den Rahmenteilen 28 und 29 sind die Aufnahmen für die Zapfenlager 10 und 11 vorgesehen, wie dies aus Fig. 6 deutlich wird. Aus Fig. 6 ist ebenfalls ersichtlich, daß Lagerbuchsen 25 und 27 eingesetzt werden, um die Reibung bei Betätigung der Klappe 8 zu reduzieren. Die Klappe 8 ist, wie aus Fig. 4 und 6 hervorgeht, an dem der Schwenkachse A abgewandten Ende mit Abrundungen 26 versehen.

Fig. 5 zeigt einen Schnitt entlang der Linie V-V in Fig. 4. Daraus ist ersichtlich, daß die Klappe 8 in der Mitte der Trennwand 23 gelagert ist, wobei in der ersten Position der Klappe 8 diese mit der Trennwand 23 fluchtet. Sie verschließt damit die Öffnung 14 im oberen Teil der Trennwand 23. Aus Fig. 5 und 6 ist außerdem ersichtlich, daß die Breite B der Rahmenteile 28 und 29 größer ist als die Dicke D der Trennwand 23, so daß die Trennwand 23 möglichst materialsparend ausgeführt werden kann, während in den Rahmenteilen 28 und 29 genügend Platz zur Anordnung der Lageröffnungen 12 und 13 vorhanden ist. Die Fig. 7 zeigt eine perspektivische Ansicht der Anordnung gemäß Fig. 4, wobei die Bezugszeichen für gleiche Teile mit denjenigen der Fig. 4 bis 6 übereinstimmen.

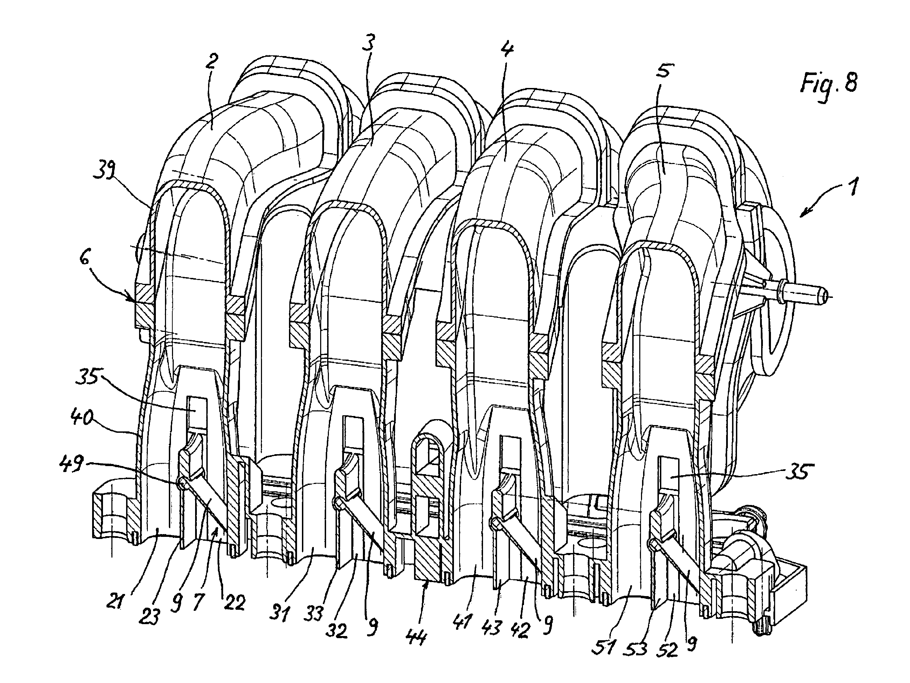

Die Fig. 8 zeigt eine Ausführungsvariante des Saugmoduls 1 zu derjenigen, die in Fig. 1 dargestellt ist. Den gleichen Aufbau haben das Gehäuse 6 mit der Oberschale 39 und Unterschale 40 sowie die darin ausgebildeten Ansaugtrakte 2, 3, 4 und 5. Geändert ist demgegenüber die Gestaltung der Trennwand 23, 33, 43, 53 und die daran angeordnete Klappe 9, die das bewegliche Bauteil 7 bildet. Wie aus dieser Darstellung ersichtlich, ist der unterhalb eines Schwenklagers 49 der Klappe 9 befindliche Abschnitt der Trennwand 23 sehr dünn ausgeführt, so daß die Klappe 9 in der ersten Position, nämlich bei völliger Freigabe der zweiten Saugrohröffnung 22, keinen Strömungswiderstand bildet. Außerdem ist die Trennwand 23, 33, 43, 53 bezüglich ihrer Länge kürzer, da die nach unten gerichtete Klappe 9 dies ermöglicht. In dieser Ausgestaltung befindet sich nämlich das Schwenklager 49 am oberen Ende der Klappe 9. Die Arbeitsweise der beweglichen Bauteile 7 in dem in Fig. 8 dargestellten Saugmodul 1 ist die gleiche wie zu dem vorangegangenen Ausführungsbeispiel beschrieben.

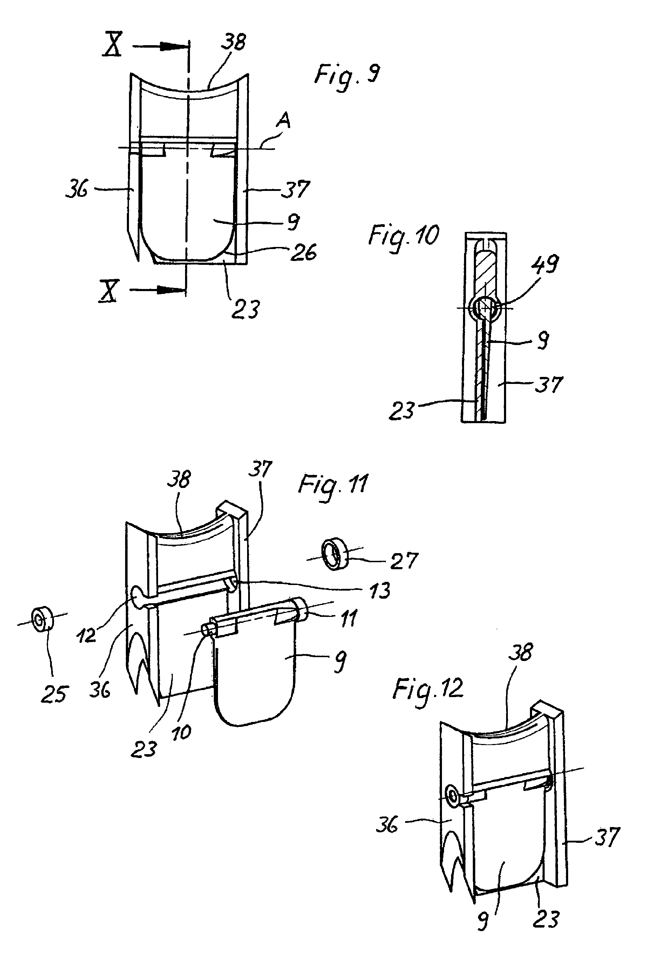

Die Fig. 9 zeigt eine Vorderansicht der Trennwand 23 aus Fig. 8 und in Fig. 10 ist der Schnitt durch die Fig. 9 entlang der Linie X-X gezeigt. Wie aus diesen Darstellungen ersichtlich ist, umfaßt die Trennwand 23 seitliche Rahmenteile 36 und 37, deren jeweiliges oberes Ende auf der gleichen Höhe angeordnet ist. Zwischen den oberen Enden der Rahmenteile 36 und 37 ist der vordere Rand 38 der Trennwand konkav verlaufend ausgeführt. Die Dicke des unteren Teils der Trennwand 23 ist so bemessen, daß bei an der Trennwand 23 anliegender Klappe 9 der Querschnitt der zweiten Saugrohröffnung nicht geringer ist als in dem Bereich vor dem Schwenklager 49.

Die Fig. 11 und 12 zeigen die Trennwand 23 mit der daran angeordneten Klappe 9 in einer Explosionsdarstellung und in einer perspektivischen Darstellung. Auch in dieser Ausführung können Lagerbuchsen 25 und 27 vorgesehen werden, da auch die Zapfenlager 10 und 11 in der Weise gestaltet sind, wie dies zu dem zuvor beschriebenen Ausführungsbeispiel angegeben wurde.

## Patentansprüche

1. Saugmodul (1), insbesondere für eine Brennkraftmaschine mit mindestens einem Ansaugtrakt (2, 3, 4, 5), der zumindest zwei Saugrohröffnungen (21, 22; 31, 32; 41, 42; 51, 52) aufweist, von denen eine erste Saugrohröffnung (21, 31, 41, 51) mit im wesentlichen konstantem Querschnitt in die Brennkraftmaschine führt und eine zweite Saugrohröffnung (22, 32, 42, 52) desselben Ansaugtraktes (2, 3, 4, 5) bezüglich ihres Strömungsquerschnitts veränderbar ist,
**dadurch gekennzeichnet, daß** in einem Gehäuse (6), in dem der Ansaugtrakt (2, 3, 4, 5) ausgebildet ist, eine Trennwand (23, 33, 43, 53) als separates Bauteil eingesetzt ist, durch die die Saugrohröffnungen desselben Ansaugtraktes (2, 3, 4, 5) in einem bestimmten Abschnitt voneinander getrennt sind und daß an der Trennwand (23, 33, 43, 53) ein bewegliches Bauteil (7) gelagert ist, durch das der Strömungsquerschnitt der zweiten Saugrohröffnung (22, 32, 42, 52) veränderbar ist, wobei das bewegliche Bauteil (7) als Klappe (8, 9) ausgeführt und an einem Ende um eine Achse (A) schwenkbar gelagert ist, wobei die Klappe (8, 9) mittels Zapfenlagern (10, 11) in Lageröffnungen (12, 13) der Trennwand (23, 33, 43, 53) gelagert ist, und wobei die beiden an einer Klappe (8, 9) ausgebildete Zapfenlager (10, 11) und ebenso die Lageröffnungen (12, 13) in der Trennwand (23, 33, 43, 53) unterschiedliche Durchmesser aufweisen.

2. Saugmodul nach Anspruch 1,
**dadurch gekennzeichnet, daß** die Klappe (8, 9) in zwei Positionen einstellbar ist, wobei die zweite Saugrohröffnung (22, 32, 42, 52) in einer ersten Position der Klappe (8, 9) vollständig geöffnet und in der zweiten Position vollständig geschlossen ist.

3. Saugmodul nach Anspruch 2,
**dadurch gekennzeichnet, daß** die Klappe (8, 9) in der ersten Position vollständig innerhalb der Kontur der Trennwand (23, 33, 43, 53) liegt.

4. Saugmodul nach einem der Ansprüche 1 bis 3,
**dadurch gekennzeichnet, daß** sich die Schwenkachse (A) an dem Ende der Klappe (8) befindet, das in der zweiten Saugrohröffnung (22, 32, 42, 52) weiter hinten liegt.

5. Saugmodul nach Anspruch 4,
**dadurch gekennzeichnet, daß** in der Trennwand (23, 33, 43, 53) vor der Schwenkachse (A) der Klappe (8) eine Öffnung (14) vorgesehen ist, die mindestens annähernd der Klappenkontur entspricht und in der ersten Position der Klappe (8) durch diese verschließbar ist.

6. Saugmodul nach einem der Ansprüche 1 bis 3,
**dadurch gekennzeichnet, daß** sich die Schwenkachse (A) an dem Ende der Klappe (9) befindet, das in der zweiten Saugrohröffnung (22, 32, 42, 52) weiter vorne liegt.

7. Saugmodul nach einem der Ansprüche 1 bis 6,
**dadurch gekennzeichnet, daß** eine Betätigungsstange (15) vorgesehen ist, mittels der alle Klappen (8, 9) simultan betätigbar sind.

8. Saugmodul nach einem der Ansprüche 1 bis 7,
**dadurch gekennzeichnet, daß** an einem Zapfenlager (11) jeder Klappe (8, 9) ein Hebel (16) angeordnet ist, dessen freies Ende mit der Betätigungsstange (15) gekoppelt ist. 8

9. Saugmodul nach einem der Ansprüche 1 bis 8,
**dadurch gekennzeichnet, daß** in dem Ansaugtrakt (2, 3, 4, 5) Nuten (35) vorgesehen sind, in denen seitliche Ränder (17, 18) der Trennwand (23, 33, 43, 53) aufgenommen sind.

10. Saugmodul nach Anspruch 9,
**dadurch gekennzeichnet, daß** die seitlichen Ränder (17, 18) der Trennwand (23, 33, 43, 53) als Rahmenteile (28, 29; 36, 37) ausgebildet sind, deren Breite (B) größer ist als die Dicke (D) der Trennwand (23, 33, 43, 53).

11. Saugmodul nach Anspruch 10;
**dadurch gekennzeichnet, daß** die Rahmenteile (28, 29) an einer Trennwand (23, 33, 43, 53) unterschiedliche Längen aufweisen und der vordere Rand (30) der Trennwand (23, 33, 43, 53) bezogen auf die Breite der Trennwand (23, 33, 43, 53) schräg verläuft.

12. Saugmodul nach Anspruch 10,
**dadurch gekennzeichnet, daß** die Rahmenteile (36, 37) gleichlang sind und der vordere Rand (38) der Trennwand (23, 33, 43, 53) bezogen auf die Breite (B) der Trennwand (23, 33, 43, 53) konkav verläuft

13. Saugmodul nach einem der Ansprüche 1 bis 12,
**dadurch gekennzeichnet, daß** die Klappe (8, 9) einen Klappenkörper (19, 20) aufweist, an dessen der Schwenkachse (A) abgewandtem Ende seitliche Abrundungen (26) vorgesehen sind.

## Claims

1. Intake module (1), more especially for an internal combustion engine having at least one intake tract (2, 3, 4, 5), which includes at least two intake pipe openings (21, 22; 31, 32; 41, 42; 51, 52), of which a first intake pipe opening (21, 31, 41, 51) has a substantially constant cross-section and leads into the internal combustion engine and the cross-sectional flow of a second intake pipe opening (22, 32, 42, 52) of the same intake tract (2, 3, 4, 5) is modifiable, **characterised in that** a separating wall (23, 33, 43, 53) is inserted as a separate component in a housing (6), in which the intake tract (2, 3, 4, 5) is formed, the separating wall separating the intake pipe openings of the same intake tract (2, 3, 4, 5) in a certain section from each other and **in that** a displaceable component (7) is mounted on the separating wall (23, 33, 43, 53), by means of which displaceable component the cross-sectional flow of the second intake pipe opening (22, 32, 42, 52) is modifiable, wherein the displaceable component (7) is in the form of a flap (8, 9) and is mounted at one end so as to be pivotable about an axis (A), wherein the flap (8, 9) is mounted by means of journal bearings (10, 11) in bearing openings (12, 13) in the separating wall (23, 33, 43, 53), and wherein the two journal bearings (10, 11) provided on a flap (8, 9) and also the bearing openings (12, 13) in the separating wall (23, 33, 43, 53) have different diameters.

2. Intake module according to claim 1, **characterised in that** the flap (8, 9) is adjustable into two positions, wherein the second intake pipe opening (22, 32, 42, 52) is completely open in a first position of the flap (8, 9) and completely closed in a second position.

3. Intake module according to claim 2, **characterised in that** the flap (8, 9) is situated completely inside the contour of the separating wall (23, 33, 43, 53) in the first position.

4. Intake module according to one of claims 1 to 3, **characterised in that** the pivotal axis (A) is situated at the end of the flap (8) that is downstream in the second intake pipe opening (22, 32, 42, 52).

5. Intake module according to claim 4, **characterised in that** an opening (14) is provided in the separating wall (23, 33, 43, 53) upstream of the pivotal axis (A) of the flap (8), the said opening corresponding at least approximately to the flap contour and in the first position of the flap (8) being closable by the said flap.

6. Intake module according to claims 1 to 3, **characterised in that** the pivotal axis (A) is situated at the end of the flap (9) that is upstream in the second intake pipe opening (22, 32, 42, 52).

7. Intake module according to one of claims 1 to 6, **characterised in that** there is provided an actuating rod (15), by means of which all the flaps (8, 9) are actuatable in a simultaneous manner.

8. Intake module according to one of claims 1 to 7, **characterised in that** a lever (16) is provided on a journal bearing (11) of each flap (8, 9), the free end of which lever is coupled with the actuating rod (15).

9. Intake module according to one of claims 1 to 8, **characterised in that** grooves (35) are provided in the intake tract (2, 3, 4, 5), in which grooves lateral edges (17, 18) of the separating wall (23, 33, 43, 53) are accommodated.

10. Intake module according to claim 9, **characterised in that** the lateral edges (17, 18) of the separating wall (23, 33, 43, 53) are in the form of frame parts (28, 29; 36, 37), the width (B) of which is greater than the thickness (D) of the separating wall (23, 33, 43, 53).

11. Intake module according to claim 10, **characterised in that** the frame parts (28, 29) on one separating wall (23, 33, 43, 53) are of different lengths and the front edge (30) of the separating wall (23, 33, 43, 53) extends in an inclined manner with regard to the width of the separating wall (23, 33, 43, 53).

12. Intake module according to claim 10, **characterised in that** the frame parts (36, 37) are of identical lengths and the front edge (38) of the separating wall (23, 33, 43, 53) extends in a concave manner with regard to the width (B) of the separating wall (23, 33, 43, 54).

13. Intake module according to one of claims 1 to 12, **characterised in that** the flap (8, 9) has a flap body (19, 20) and lateral roundings (26) are provided on the end of the said flap body remote from the pivotal axis (A).

## Revendications

1. Module d'aspiration (1), notamment pour moteur à combustion interne, comprenant au moins un circuit d'admission (2, 3, 4, 5) muni d'au moins deux ouvertures de tubes d'admission (21, 22 ; 31, 32 ; 41, 42 ; 51, 52), dont une première ouverture de tube d'admission (21, 31, 41, 51) conduit, avec une section transversale sensiblement constante dans le moteur à combustion interne, et une deuxième ouverture de tube d'admission (22, 32, 42, 52) du même circuit d'admission (2, 3, 4, 5) possède une section de passage de flux variable,
**caractérisé en ce qu'**
un carter (6) dans lequel se trouve le circuit d'admission (2, 3, 4, 5) comprend une cloison (23, 33, 43, 53) sous forme de composant séparé, séparant les ouvertures de tubes d'admission du circuit d'admission (2, 3, 4, 5) sur une certaine section les unes des autres, et un composant mobile (7) permettant de modifier la section de passage de flux de la deuxième ouverture de tube d'admission (22, 32, 42, 52) est installé sur la cloison (23, 33, 43, 53), ce composant mobile (7) étant un volet (8, 9) pivotant à l'une de ses extrémités autour d'un axe (A) et logé au moyen de paliers de tourillons (10, 11) dans des ouvertures de paliers (12, 13) de la cloison (23, 33, 43, 53), et les deux paliers de tourillons (10, 11) prévus sur un volet (8, 9) de même que les ouvertures de paliers (12, 13) de la cloison (23, 33, 43, 53) présentent un diamètre différent.

2. Module d'aspiration (1) selon la revendication 1,
**caractérisé en ce que**
le volet (8, 9) se règle à deux positions, la deuxième ouverture de tube d'admission (22, 32, 42, 52) étant complètement ouverte à la première position et complètement fermée à la deuxième position du volet (8, 9).

3. Module d'aspiration (1) selon la revendication 2,
**caractérisé en ce qu'**
à sa première position, le volet (8, 9) se trouve complètement à l'intérieur du contour de la cloison (23, 33, 43, 53).

4. Module d'aspiration (1) selon l'une des revendications 1 à 3,
**caractérisé en ce que**
l'axe de pivotement (A) se trouve à l'extrémité du volet (8) située le plus en arrière dans la deuxième ouverture de tube d'admission (22, 32, 42, 52).

5. Module d'aspiration (1) selon la revendication 4,
**caractérisé en ce qu'**
on prévoit dans la cloison (23, 33, 43, 53) devant l'axe de pivotement (A) du volet (8) une ouverture (14) qui correspond au moins approximativement au contour du volet, et fermée par celui-ci dans sa première position.

6. Module d'aspiration (1) selon l'une des revendications 1 à 3,
**caractérisé en ce que**
l'axe de pivotement (A) se trouve à l'extrémité du volet (9) située le plus en avant dans la deuxième ouverture de tube d'admission (22, 32, 42, 52).

7. Module d'aspiration (1) selon l'une des revendications 1 à 6,
**caractérisé en ce qu'**
une tige d'actionnement (15) permet d'actionner simultanément tous les volets (8, 9).

8. Module d'aspiration (1) selon l'une des revendications 1 à 7,
**caractérisé en ce qu'**
un palier de tourillon (11) de chaque volet (8, 9) comporte un levier (16) dont l'extrémité libre est couplée à la tige d'actionnement (15).

9. Module d'aspiration (1) selon l'une des revendications 1 à 8,
**caractérisé en ce que**
le circuit d'admission (2, 3, 4, 5) comporte des rainures (35) dans lesquelles s'engagent des rebords latéraux (17, 18) de la cloison (23, 33, 43, 53).

10. Module d'aspiration (1) selon la revendication 9,
**caractérisé en ce que**
les rebords latéraux (17, 18) de la cloison (23, 33, 43, 53) sont des pièces d'encadrement (28, 29 ; 36, 37) dont la largeur (B) est supérieure à l'épaisseur (D) de la cloison (23, 33, 43, 53).

11. Module d'aspiration (1) selon la revendication 10,
**caractérisé en ce que**
les pièces d'encadrement (28, 29) d'une cloison (23, 33, 43, 53) sont de différentes longueurs et le bord avant (30) de cette cloison (23, 33, 43, 53) est incliné sur la largeur de celle-ci.

12. Module d'aspiration (1) selon la revendication 10,
**caractérisé en ce que**
les pièces d'encadrement (36, 37) sont de même longueur et le bord avant (38) de la cloison (23, 33, 43, 53) est concave sur la largeur de celle-ci.

13. Module d'aspiration (1) selon l'une des revendications 1 à 12,
**caractérisé en ce que**
le volet (8, 9) comprend un corps de volet (19, 20) comportant des arrondis (26) latéraux sur l'extrémité opposée à l'axe de pivotement (A).
